Europäisches Patentamt

European Patent Office

Office européen des brevets

(11) Veröffentlichungsnummer: **0 126 485**
**A1**

(12) **EUROPÄISCHE PATENTANMELDUNG**

(21) Anmeldenummer: 84105809.2

(51) Int. Cl.³: **B 01 J 2/22**

(22) Anmeldetag: 22.05.84

(30) Priorität: 24.05.83 DE 3318787

(43) Veröffentlichungstag der Anmeldung: 28.11.84
Patentblatt 84/48

(84) Benannte Vertragsstaaten: **AT BE CH DE FR GB IT LI NL SE**

(71) Anmelder: Sulzberger, Johann, Radegundls 11,
D-8900 Augsburg 22 (DE)
Anmelder: Fetz, Anton, Forststrasse 52,
D-6890 Lustenau (DE)

(72) Erfinder: Sulzberger, Johann, Radegundls 11,
D-8900 Augsburg 22 (DE)
Erfinder: Fetz, Anton, Forststrasse 52, D-6890 Lustenau
(DE)

(74) Vertreter: Liebau, Gerhard, Dipl.-Ing., Birkenstrasse 39,
D-8900 Augsburg 22 (DE)

(54) **Pelletpresse.**

(57) Bei einer Pelletpresse zum Pelletieren von schüttfähigem Pressgut aus lockerem, vorwiegend organischem Material, insbesondere Abfallstoffen oder Futtermitteln, ist ein um eine Achse (A1) drehend angetriebenes Matrizenrad (2) vorgesehen, welches an seinem Umfang eine Vielzahl von in gleicher Teilung (t) angeordneten Matrizen (3) aufweist, von denen jede einen sich von einer rechteckigen oder quadratischen Einfüllöffnung (4a) zu einem Austrittskanal (5) gleichbleibenden, vorzugsweise zylindrischen Querschnitts hin trichterförmig verjüngenden Presskanal (4) aufweist. Es ist ferner mindestens ein zahnradartiges, um seine Achse (A2; A3; A4) drehend angetriebenes Pressrad (6a; 6b; 6c) vorgesehen, welches an seinem Umfang als Zähne mehrere Pressstempel (7a; 7b; 7c) aufweist, die in der gleichen Teilung (t) angeordnet sind wie die Matrizen (3) am Matrizenrad (2), die jeweils eine in den an die Einfüllöffnung (4a) angrenzenden Teil des Presskanals (4) jeder Matrize (3) passende Form aufweisen und die zahnradartig nacheinander in aufeinanderfolgende Matrizen eingreifen.

<u>Pelletpresse.</u>

Die Erfindung betrifft eine Pelletpresse zum Pelletieren
von schüttfähigem Preßgut aus lockerem, vorwiegend organischem Material, insbesondere Abfallstoffen oder Futtermitteln.

Mit der neuen Pelletpresse sollen zerkleinerter und getrockneter Hausmüll, Sägemehl, Hobelspäne, Baumrinde,
Schalen und Hülsen von Früchten, zerkleinertes Stroh und
sonstige organische Stoffe zu Pellets gepreßt werden, die
später zu Heizzwecken verwendet werden. Derartige Pellets
müssen hoch verdichtet und sehr kompakt sein, damit sie
schütt- und lagerfähig sind. Ähnliches gilt, wenn Futtermittel zu Pellets gepreßt werden sollen.

Mit den üblichen Brikettpressen für Kohle und Erz kann
nur rieselfähiges, feinkörniges Material brikettiert werden. Strangpressen und Pressen mit Schneckenwalzen haben
im Verhältnis zum Energieverbrauch eine zu geringe Leistung und sind deshalb auf dem Gebiet der Abfallverwertung
nicht rentabel einsetzbar. Bei Matrizenpressen mit Kollergang ergeben sich erhebliche Schwierigkeiten, wenn das
Preßgut trocken ist. Die Matrizenfläche zwischen den
einzelnen Preßkanälen wirkt dann nämlich ähnlich wie ein
Mahlstein, so daß ein Teil des zu verpressenden Materials
fein gemahlen wird und sich nicht mehr verpressen läßt.
Das feingemahlene Material läuft locker durch die Preßkanäle und es ergeben sich im fertigen Produkt bis zu 80%
Staub und nur 20% Pellets. Trockenes Material ist aber
für die Erzeugung von Heizpellets Voraussetzung.

Der Erfindung liegt die Aufgabe zugrunde, eine Pelletpresse
zum Pelletieren von schüttfähigem Preßgut aus lockerem,
vorwiegend organischem Material, insbesondere Abfallstoffen
oder Futtermitteln zu schaffen, die einfach in ihrem Aufbau ist, einen geringen Energieverbrauch hat, einer minima-

0126485

len Abnutzung unterworfen ist und die auch aus trockenem Preßgut ohne Mahlvorgang weitgehend pulverfreie Pellets preßt.

Die Pelletpresse ist nach der Erfindung gekennzeichnet durch ein um eine Achse drehend angetriebenes Matrizenrad, welches an seinem Umfang eine Vielzahl von in gleicher Teilung (in gleichen Umfangsabständen von Mitte zu Mitte) angeordneten Matrizen aufweist, von denen jede einen sich von einer rechteckigen oder quadratischen Einfüllöffnung zu einem Austrittskanal gleichbleibenden, vorzugsweise zylindrischen Querschnitts hin trichterförmig verjüngenden Preßkanal aufweist und mindestens ein zahnradartiges, um seine Achse drehend angetriebenes Preßrad, welches an seinem Umfang als Zähne mehrere Preßstempel aufweist, die in der gleichen Teilung angeordnet sind wie die Matrizen am Matrizenrad, die jeweils eine in den an die Einfüllöffnung angrenzenden Teil des Preßkanals jeder Matrize passende Form aufweisen und die zahnradartig nacheinander in aufeinanderfolgende Matrizen eingreifen.

Durch die Preßstempel, die nach Art von Zähnen an dem Preßrad angeordnet sind, wird das an einer Füllstation in die Preßkanäle eingefüllte Preßgut sehr stark verdichtet, ohne daß hierbei eine Vermahlung des Preßgutes stattfindet. Aus den Austrittskanälen tritt des kompaktierte Preßgut in Form von einzelnen Strängen aus, die selbsttätig abbrechen oder durch ein an einer geeigneten Stelle angeordnetes Messer abgeschnitten werden können, so daß einzelne Pellets entstehen. Die Pelletpresse arbeitet mit geringem Energieverbrauch und hat nur eine geringe Abnutzung.

Vorteilhafte Ausgestaltungen der Erfindung sind in den Unteransprüchen gekennzeichnet.

Die Erfindung ist in folgendem, anhand von mehreren in der Zeichnung dargestellten Ausführungsbeispielen näher erläu-

0126485

tert. Es zeigen:

Figur 1 eine vordere Ansicht eines ersten Ausführungsbeispieles der Pelletpresse,
Figur 2 eine Seitenansicht,
Figur 3 einen Schnitt durch das Matrizenrad nach der
          Linie III-III der Figur 1,
Figur 4 einen Schnitt durch benachbarte Matrizen nach
          der Linie IV-IV der Figur 3,
Figur 5 ein zweites Ausführungsbeispiel in Vorderansicht,
Figur 6 ein drittes Ausführungsbeispiel in Seitenansicht.


In einem Maschinengestell 1 ist ein Matrizenrad 2 um eine
horizontale Achse A1 drehbar gelagert. Das Matrizenrad 2
trägt an seinem Umfang eine Vielzahl von Matrizen 3, die
mit dem Matrizenrad eine Einheit bilden können oder aber
auch lösbar mit dem Matrizenrad verbunden sind. Die
Matrizen 3 sind in der gleichen Teilung t, d.h. in gleichen Umfangsabständen von Mitte zu Mitte Matrize angeordnet. Jede Matrize 3 weist einen Preßkanal 4 auf, der sich
von einer rechteckigen oder quadratischen Einfüllöffnung
4a zu einem Austrittskanal 5 hin trichterförmig verjüngt.
Der Austrittskanal 5 hat gleichbleibenden Querschnitt,
vorzugsweise einen zylindrischen Querschnitt.

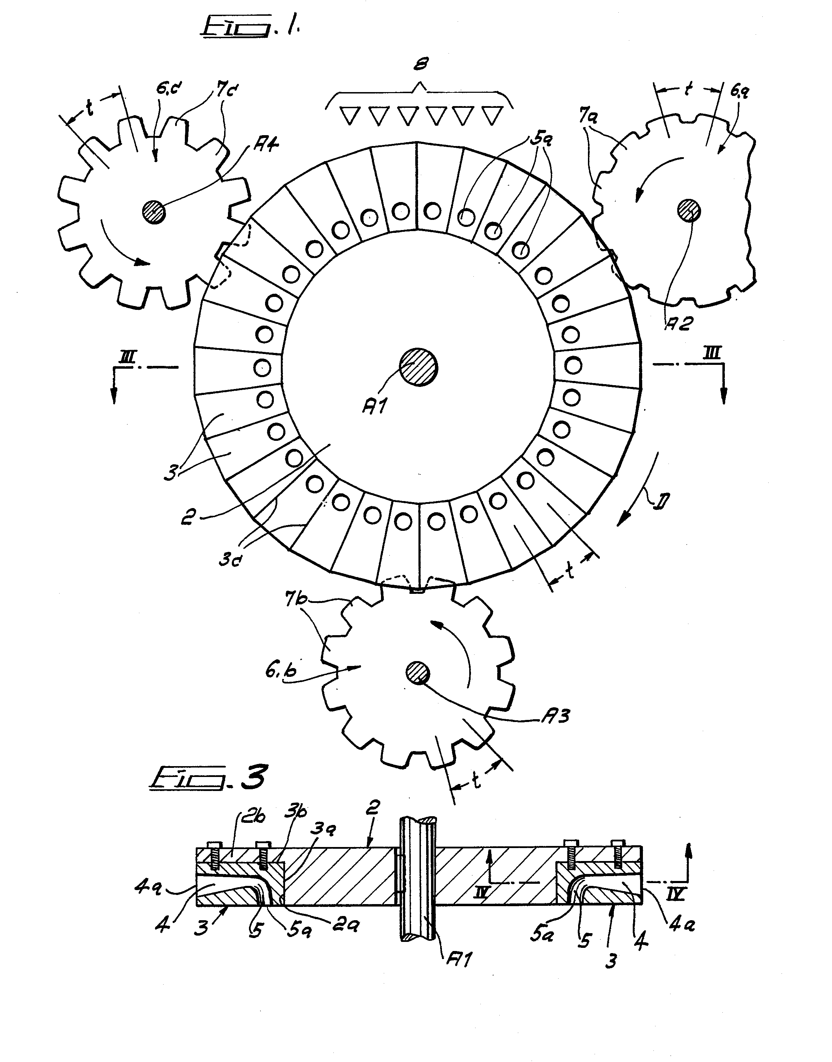

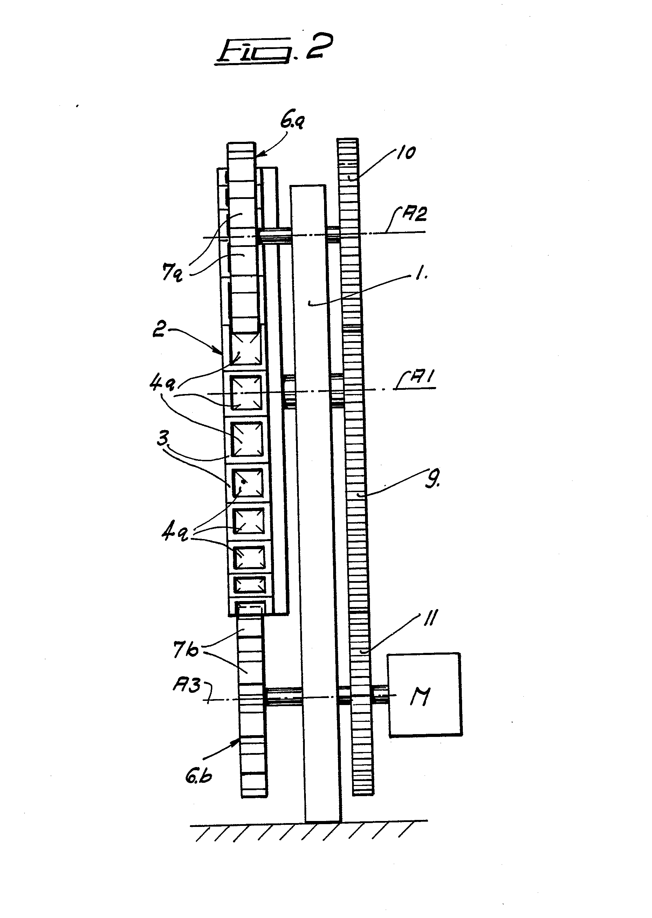

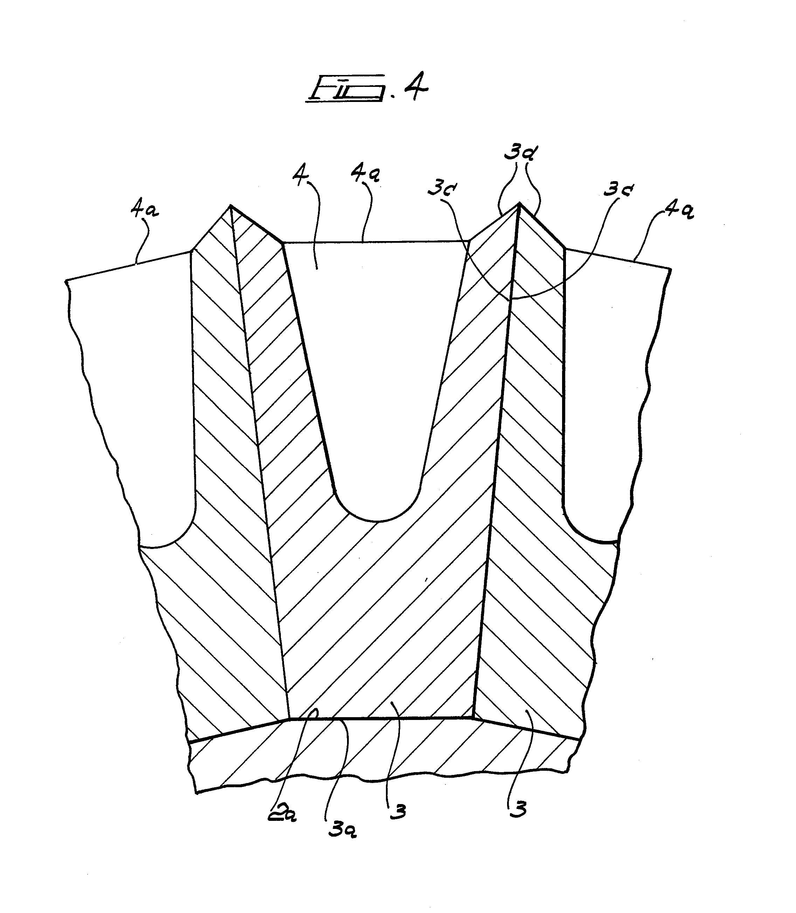

Bei dem in Figur 1 - 4 dargestellten Ausführungsbeispiel
sind am äußeren Umfang des Matrizenrades 2 drei Preßräder
6a, 6b und 6c in gleichmäßigen Umfangsabständen verteilt
angeordnet. Die Preßräder 6a, 6b, 6c sind im Maschinengestell 1 um Achsen A2, A3, A4 drehbar gelagert, die parallel
zur Achse A1 des Matrizenrades 2 verlaufen. Jedes Preßrad
6a, 6b, 6c ist zahnradartig ausgebildet und weist an seinem
Umfang als Zähne mehrere Preßstempel 7a, 7b, 7c auf. Diese
Preßstempel 7a, 7b, 7c sind an den Preßrädern 6a, 6b, 6c
in der gleichen Teilung t angeordnet, wie die Matrizen 3
am Matrizenrad 2. Jeder Preßstempel 7a, 7b, 7c weist eine
Form auf, die in den an die Einfüllöffnung 4a angrenzenden

0126485

Teil des Preßkanals 4 jeder Matrize 3 paßt. Die Preßstempel 7a, 7b, 7c greifen nacheinander zahnradartig in aufeinanderfolgende Matrizen ein.

Wie man aus Figur 1 erkennen kann, sind die Preßstempel 7a, 7b, 7c in radialer Richtung unterschiedlich hoch, wobei ausgehend von einer Füllstation 8 das in Drehrichtung D des Matrizenrades 2 jeweils nachfolgende Preßrad gegenüber dem vorhergehenden höhere Preßstempel aufweist.

Die Preßräder 6a, 6b, 6c werden synchron mit dem Matrizenrad 2 über ein zwischengeschaltetes Getriebe angetrieben. Dabei kann es sich vorteilhaft um ein aus den Zahnrädern 9, 10, 11 bestehendes Zahnradgetriebe handeln. Das Zahnrad 12 wird von einem Motor M angetrieben.

Das Preßgut wird dem Matrizenrad an der Füllstation 8 zugeführt. Hierbei kann das Preßgut dem Matrizenrad über eine Schnecke zugeführt werden, die bereits eine gewisse Vorverdichtung des Preßgutes bewirkt. Das Preßgut tritt durch die Eintrittsöffnungen 4a in die Preßkanäle 4 ein. Das in Drehrichtung D erste Preßrad 6a drückt mit seinen Preßstempeln 7a das Preßgut in den Preßkanal 4 beispielsweise 1 cm tief hinein. Das zweite Preßrad 6b drückt dann mit seinen Preßstempeln 7b, die um 1 cm höher sind als die Preßstempel 7a, um einen weiteren cm in den Preßkanal 4 ein. Das dritte Preßrad 6c bewirkt mit seinen wiederum gegenüber dem Preßrad 6b um 1 cm höheren Preßstempeln 7c ein weiteres Eindrücken des Preßgutes, wodurch dieses stark kompaktiert wird. Durch das Zusammenpressen des Preßgutes ist in jeder Matrize wieder genügend Raum entstanden, so daß an der Füllstation 8 neues Preßgut aufgenommen werden kann und sich der Preßvorgang in der oben beschriebenen Weise wiederholt. Nach einigen Drehungen tritt an jeder Austrittsöffnung 5a jeder Matrize 3 ein Strang von verdichtetem Preßgut aus, der von selbst abbricht oder gegebenenfalls auch über ein Messer abgeschnitten werden kann.

0126485

Vorzugsweise verläuft die Achse des Preßkanales 4 jeder Matrize 3 radial und die Achse des Austrittskanales 5 schräg zur Achse A1 des Matrizenrades 2. Hierdurch geht der Preßkanal 4 in einem Bogen in den Austrittskanal 5 über. Durch diese Krümmung tritt für den Materialfluß eine gewisse Bremswirkung ein, die für eine besonders starke Kompaktierung sorgt.

Es ist ferner zweckmäßig, wenn die Achsen der Austrittskanäle 5 nebeneinanderliegender Matrizen 3 in unterschiedlichen Winkeln gegenüber der Achse A1 des Matrizenrades 1 geneigt sind. Durch diese Neigung der Achsen der Austrittskanäle 5 wird die Austrittsrichtung der aus den Austrittsöffnungen 5a austretenden Stränge bestimmt. Je nach der Neigung der Achsen treffen diese Stränge in unterschiedlichem Abstand von den Austrittsöffnungen 5a aufeinander. Durch die gegenseitige Berührung der Stränge brechen diese ab, wodurch die einzelnen Pellets gebildet werden. Durch unterschiedliche Neigung der Achsen der Austrittskanäle 5 kann die gewünschte Länge der Pellets vorbestimmt werden.

Bei dem in Figur 1 - 3 dargestellten Ausführungsbeispiel ist jede Matrize 3 lösbar mit dem Matritzenrad 2 verbunden. Jede Matrize 3 stützt sich mit einer der Einfüllöffnung 4a gegenüberliegenden Bodenfläche 3a an einer Gegenfläche 2a des Matrizenrades 2 ab. Da die Austrittsöffnung 5a nicht gegenüberliegend von der Eintrittsöffnung 4a angeordnet ist, steht die volle Bodenfläche 3a zur Abstützung der Matrize 3 zur Verfügung. Mit einer Rückenfläche 3b liegt außerdem jede Matrize 3 an einem Flansch 2b des Matrizenrades an. Außerdem liegen die Matrizen 3 mit ihren Außenflächen 3c vollflächig aneinander an. Hierdurch wird eine besonders gute Abstützung der Matrizen 3 am Matrizenrad 2 erreicht.

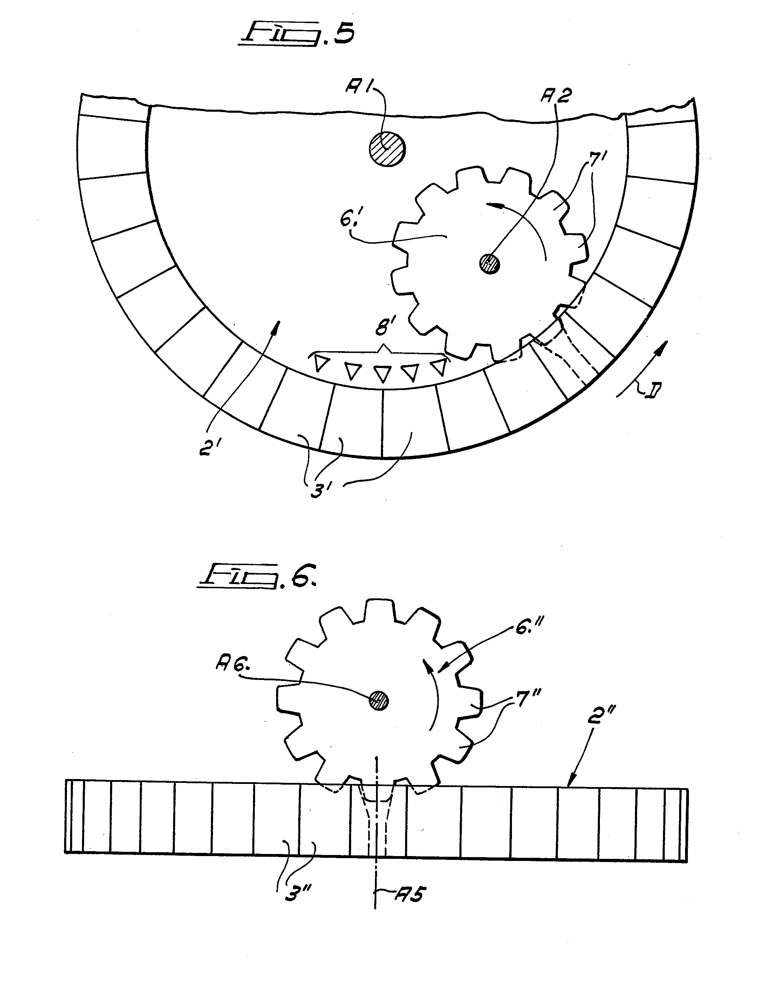

Während bei dem in Figur 1 - 3 dargestellten Ausführungsbeispiel die Preßräder 6a, 6b, 6c radial außerhalb des Matrizenrades 2 angeordnet sind, ist bei dem in Figur 5 dargestellten Ausführungsbeispiel das Preßrad 6' radial innerhalb des Matrizenrades 2' angeordnet. Das Matrizenrad 2' weist an seinem Umfang eine Vielzahl von Matrizen 3' auf, wobei obige Ausführungen bezüglich der Ausgestaltung der Preßkanäle und des Austrittskanals auch für dieses Ausführungsbeispiel sinngemäß zutreffen. Das Preßrad greift mit seinen Preßstempeln 7' nacheinander in die Preßkanäle der einzelnen Matrizen 3' ein. Bei diesem Ausführungsbeispiel ist die Füllstation 8' im Innern des Matrizenrades 2' vorgesehen. Die Achsen A1 des Matrizenrades 2' und A2 des Preßrades 6' sind horizontal und parallel zueinander angeordnet.

Bei dem in Figur 6 dargestellten Ausführungsbeispiel ist die Achse A5 des Matrizenrades 2" vertikal angeordnet und die Achse A6 des Preßrades 6" ist horizontal und radial zur Matrizenachse A5 angeordnet. Die Preßkanäle der Matrizen 3" verlaufen im wesentlichen vertikal, sie können jedoch gegebenenfalls auch zunächst vertikal und dann schräg zur Matrizenradachse 5a verlaufen.

Zweckmäßig sind die zwischen den Einfüllöffnungen 4a zweier benachbarter Matrizen 3 vorhandenen Stirnflächen 3d dachartig gegeneinander geneigt, wie es in Figur 4 dargestellt ist. Hierdurch wird nicht nur das Füllen der Preßkanäle 4 erleichtert, sondern es wird auch erreicht, daß Preßgut, welches teilweise zwischen den Zähnen und dem Preßkanal radial nach außen herausgedrückt wird, wieder in den Preßkanal zurückfällt, sobald der jeweilige Preßstempel den Preßkanal verlassen hat. Es wird damit verhindert, daß Preßgut auf den Stirnflächen 3d liegen bleibt.

0126485

Ansprüche

1. Pelletpresse zum Pelletieren von schüttfähigem Preßgut aus lockerem, vorwiegend organischem Material, insbesondere Abfallstoffen oder Futtermitteln, gekennzeichnet durch ein um eine Achse (A1; A5) drehend angetriebenes Matrizenrad (2; 2'; 2"), welches an seinem Umfang eine Vielzahl von in gleicher Teilung (t) (in gleichen Umfangsabständen von Mitte zu Mitte) angeordneten Matrizen (3; 3'; 3") aufweist, von denen jede einen sich von einer rechteckigen oder quadratischen Einfüllöffnung (4a) zu einem Austrittskanal (5) gleichbleibenden, vorzugsweise zylindrischen Querschnitts hin trichterförmig verjüngenden Preßkanal (4) aufweist, und mindestens ein zahnradartiges, um seine Achse (A2; A3; A4; A6) drehend angetriebenes Preßrad (6a; 6b; 6c; 6'; 6"), welches an seinem Umfang als Zähne mehrere Preßstempel (7a; 7b; 7c; 7'; 7") aufweist, die in der gleichen Teilung (t) angeordnet sind wie die Matrizen (3; 3'; 3") am Matrizenrad (2; 2'; 2"), die jeweils eine in den an die Einfüllöffnung (4a) angrenzenden Teil des Preßkanals (4) jeder Matrize (3; 3'; 3") passende Form aufweisen und die zahnradartig nacheinander in aufeinanderfolgende Matrizen eingreifen.

2. Pelletpresse nach Anspruch 1, dadurch gekennzeichnet, daß mehrere Preßräder (6a; 6b; 6c) vorgesehen sind, deren Preßstempel (7a; 7b; 7c) in radialer Richtung unterschiedlich hoch sind, wobei ausgehend von einer Füllstation (8) das in Drehrichtung (D) des Matrizenrades (2) jeweils nachfolgende Preßrad gegenüber dem vorhergehenden höhere Preßstempel (7a; 7b; 7c) aufweist.

3. Pelletpresse nach Anspruch 1 oder 2, dadurch gekennzeichnet, daß das oder die Preßräder (6a; 6b; 6c; 6'; 6") synchron mit dem Matrizenrad über ein zwischengeschaltetes Getriebe ( 9 - 11) angetrieben sind.

4. Pelletpresse nach Anspruch 3, dadurch gekennzeichnet, daß das Getriebe ein Zahnradgetriebe (9 —11) ist.

5. Pelletpresse nach Anspruch 1 oder 2, dadurch gekennzeichnet, daß das Matrizenrad (2, 2') um eine horizontale Achse (A1) drehbar gelagert ist und die Achse(n) (A2; A3; A4) des Preßrades (6') bzw. der Preßräder (6a; 6b; 6c) parallel zu der Achse (A1) des Matrizenrades (2, 2') verlaufen.

6. Pelletpresse nach Anspruch 6, dadurch gekennzeichnet, daß das Preßrad bzw. die Preßräder (6a; 6b; 6c) radial außerhalb des Matrizenrades (2) angeordnet sind.

7. Pelletpresse nach Anspruch 6, dadurch gekennzeichnet, daß die Achse des Preßkanals (4) jeder Matrize (3) etwa radial und die Achse des Austrittskanals (5) schräg zur Achse (A1) des Matrizenrades (2) verlaufen.

8. Pelletpresse nach Anspruch 7, dadurch gekennzeichnet, daß die Achsen der Austrittskanäle (5) nebeneinander liegender Matrizen (3) in unterschiedlichen Winkeln gegenüber der Achse (A1) des Matrizenrades (2) geneigt sind.

9. Pelletpresse nach Anspruch 1, dadurch gekennzeichnet, daß jede Matrize (3) lösbar mit dem Matrizenrad (2) verbunden ist, wobei jede Matrize (3) mit einer der Einfüllöffnung (4a) gegenüberliegenden Bodenfläche (3a) an einer Gegenfläche (2a) des Matrizenrades (2) und mit einer in einer Radialebene verlaufenden Rückenfläche (3b) an einem Flansch (2b) des Matrizenrades (2), sowie mit zwei weiteren Außenflächen (3c) an den Außenflächen (3c) der beiden benachbarten Matrizen (3) jeweils vollflächig anliegt.

0126485

10. Pelletpresse nach Anspruch 5, dadurch gekennzeichnet, daß das Preßrad (6') radial innerhalb der Matrizen (3') angeordnet ist.

11. Pelletpresse nach Anspruch 1, dadurch gekennzeichnet, daß die Achse (A5) des Matrizenrades (2") vertikal angeordnet ist, daß die Achse (A6) des Preßrades (6") horizontal und radial zur Matrizenradachse (A5) angeordnet ist, und daß die Preßkanäle der Matrizen (3") im wesentlichen vertikal verlaufen.

12. Pelletpresse nach Anspruch 1, dadurch gekennzeichnet, daß die zwischen den Einfüllöffnungen (4a) zweier benachbarter Matrizen (3) vorhandenen Stirnflächen (3d) dachartig gegeneinander geneigt sind.

1/4

0126485

FIG. 1.

FIG. 3

0126485

# FIG.2

0126485

FIG.4

4/4

0126485

Fig.5

Fig.6.

0126485

Europäisches
Patentamt

**EUROPÄISCHER RECHERCHENBERICHT**

Nummer der Anmeldung

EP 84105809.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US - A - 4 018 149 (BRUUN)<br>* Fig. 6,9 * | 1,2,5,<br>6,7,10 | B 01 J 2/22 |
| Y | SOVIET INVENTIONS ILLUSTRATED, Sektion C, Woche 79/26, 8. August 1979<br><br>DERWENT PUBLICATIONS LTD., London A 32<br>* SU-621 595 (ZOTOV) * | 1,2,5,<br>6,7 | |
| Y | DE - A1 - 2 457 604 (SIMON-BARRON LTD.)<br>* Fig. 1 * | 10 | |
| A | US - A - 3 973 484 (JARRETT)<br>* Fig. 8,9,10 * | 1 | **RECHERCHIERTE SACHGEBIETE (Int. Cl. ³)** |
| A | SOVIET INVENTIONS ILLUSTRATED, Sektion C, Woche 80/18, 11. Juni 1980<br><br>DERWENT PUBLICATIONS LTD., London L 02<br>* SU-683 796 (TERSHUKOV) * | 1 | A 23 P<br>B 01 J<br>B 30 B |

Der vorliegende Recherchenbericht wurde für alle Patentansprüche erstellt.

| Recherchenort | Abschlußdatum der Recherche | Prüfer |
|---|---|---|
| WIEN | 28-08-1984 | GLAUNACH |